# EUROPEAN PATENT APPLICATION

(11) **EP 0 919 855 A1**
(43) Date of publication of application: **02.06.1999**
(21) Application number: 98122006.4
(22) Date of filing: 19.11.1998
(51) Int. Cl.: G03B 27/62, G03G 15/00

(54) **Light emitting marks for positioning a document**

(30) Priority: 25.11.1997 US 977593
(71) Applicant: Xerox Corporation, Rochester, New York 14644 (US)
(72) Inventor: Freitas, Jr., Harry F., Rochester, New York 14612 (US)
(74) Representative: Grünecker, Kinkeldey, Stockmair & Schwanhäusser Anwaltssozietät

(57) **Abstract**

This invention is a method and apparatus for registering documents on a copier platen. An operator selects the operating features of the copier, such as magnification, original document size, and copy substrate size. Then, based upon the copier setting, selected ones of a plurality of light emitting elements located adjacent the platen illuminate so as to inform an operator where the original document should be located.

## Description

### FIELD OF THE INVENTION

This invention relates to registering documents on platens. More particularly, this invention relates to lights which show operators where to place documents.

### BACKGROUND AND SUMMARY OF THE INVENTION

Electrophotographic copiers have platens onto which documents are placed for copying. Typically, platens are glass plates that are boarded by one or more raised, straight edged registration guides. By placing a document on the platen and against one or more registration guides a document is properly orientated for imaging. If all documents were single sheets of similarly sized paper, and if the only task performed was simple duplication, it would be easy to accurately locate original documents on a platen. All one would need to do would be to use two registration guides, one to locate one side of the document, the other to locate an adjacent side.

However, in practice things are not that simple. Modern electrophotographic copiers enlarge and reduce the images on many different sizes of documents onto many different sized substrates. The result is a persistent problem with identifying exactly where on the platen to locate an original for a given magnification and paper size. That problem increases as the number of different combinations of magnifications, original document sizes, and copy substrate sizes increases.

A partial solution to this problem is to include labeled indicia, essentially tick marks, on the registration guides. This solution is particularly beneficial with experienced machine operators since such an operator develops a feel for the machine and for the indicia marks. Unfortunately, labeled indicia are rather unhelpful to the casual operator who infrequently makes copies on the machine. Indeed, from a human factor point of view the labeled indicia makes the process of copying even more confusing since it is not always clear what the indicia signify.

Another approach to locating originals on platens is presented in United States Patent 5081497. That patent teaches the use of a set of patterns that are made visible prior to start of the copy operation. When actually copying a document the patterns are removed. This is accomplished by locating a retractable "window shade" film substrate beneath the platen, with the film substrate having document outlines. By using the outlines operators can easily find the pattern that matches the copy machine set-up conditions. While the teachings of that patent are beneficial, the window shade film and its retraction mechanism increases the cost and reduces the reliability of the overall copy machine.

Other approaches to locating originals on platens have also been taken. For example United States Patent 4,595,285 discloses an electrophotographic copying machine having a translucent document cover with paper size index lines that provide accurate document positioning during manual copying. That translucent cover pivotally rotates in and out of position over a glass plate. The cover includes paper size index lines as indicia for indicating a copy size outline for various size papers to provide accurate document positioning on a glass plate. United States Patent 4,436,402 discloses a copy board comprising index plate position indexes of various sizes which are used to correlate document positioning with the optics of a copying machine. United States Patent 4,415,261 discloses a copying machine comprising a platen cover which includes color marks or patterns for properly positioning an original on a transparent plate. United States Patent 4,783,679 discloses an original-setting table for properly aligning document of different sizes with the optics of a copying machine. United States Patent 4,721,981 discloses a copying machine comprising a retractable "curtain shade" platen cover, i.e., a thin flexible film that reels out from a scroll into position over and above a document platen during copying.

While other approaches to locating originals on platens are known, they all suffer from one of more defects of increased cost, limited applicability, reduced reliability, or implementation difficult. Therefore, particularly in low cost electrophotographic copiers, another approach to reducing the difficulty for locating documents on platen would be beneficial.

### BRIEF DESCRIPTION OF THE DRAWINGS

The present invention relates to a document registration assembly according to claim 1.

Other aspects of the present invention will become apparent as the following description proceeds and upon reference to the following drawings, in which like reference numerals identify like elements and wherein:
Figure 1 presents a top-down view of a document registration system;
Figure 2 presents a cut-away view of the document registration system shown in Figure 1 taken along the line 2-2, and
Figure 3 schematically illustrates the interaction of operator adjusted inputs with a document reproduction controller.

### DESCRIPTION OF THE PREFERRED EMBODIMENT

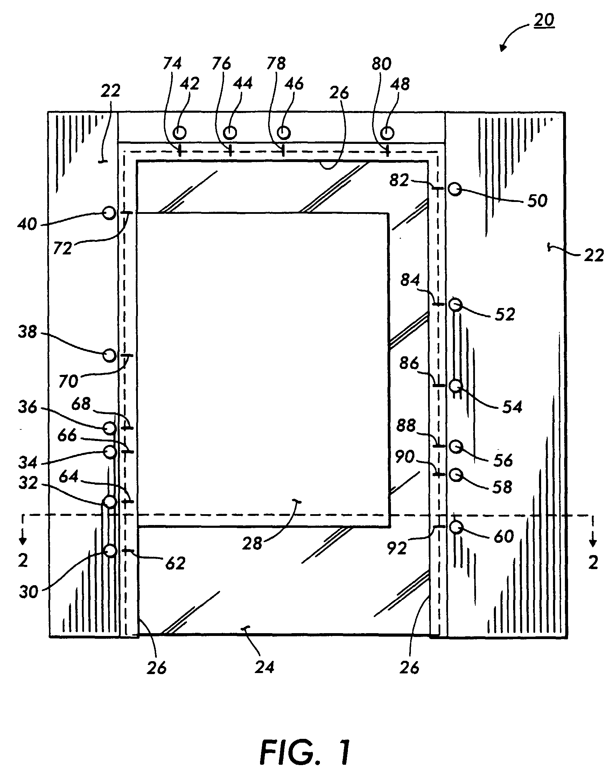

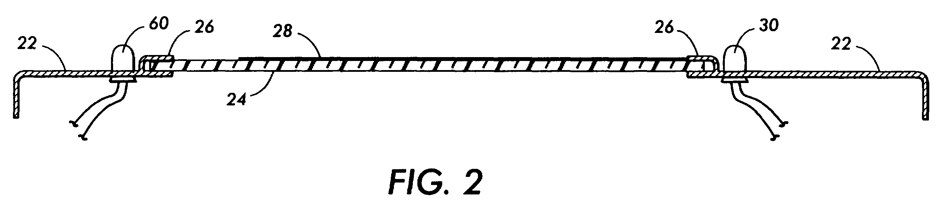

For a general understanding of the principles of the present invention reference is made to the figures, in which like reference numerals designate like elements. In particular, Figures 1 and 2 illustrate a generic document registration system 20 suitable for locating an original document in a light lens copier. Although the principles of the present invention are well suited for use in light lens copiers, they are also well suited for use in other types of equipment. For example, the present invention may find use in input scanning devices such as document digitizers and facsimile machines. Therefore, it should be understood that the present invention is not limited to the particular embodiment illustrated in the figures to the particular application shown therein and discussed below.

The illustrated document registration system 20 is comprised of a frame 22 onto which is firmly mounted a glass platen 24. The frame 22 includes raised document registration edges 26 that are used as guides for locating a document 28 that is to be scanned. In practice the frame is beneficially made of either sheet metal or plastic.

The present invention specifically relates to visual aids that assist operators in properly locating documents on the platen 24. Known in the prior art is the use of raised document registration edges similar to the edges 26. Also known is to add indicia marks on the raised document registration edges. For example, the Xerox 5328 copier has one raised document registration edge (on the left hand side) that includes indicia marks for 5.5", A4, and 8.5" size originals. Furthermore, under the platen near its top edge are indicia marks for various sizes and orientations of paper, and under the platen near its bottom edge is a symbol that shows where to locate books for book copying.

Where to actually locate the original document 28 on the substrate depends upon the machine set-up, that is, the function to be accomplished. In general, the best location to place an original depends upon the size of the original, the size of the substrate onto which the original image is to be copied, and the magnification ratio. In practice, operators select the magnification ratio (Reduction/Enlargement) using an control adjustment and the substrate by selecting which bin the substrate is fed from.

While indicia marks are helpful, when an operator attempts to make a copy from a prior art machine with which the operator is not familiar it can be difficult to determine the correct orientation and the proper placement of the original. Frequently a trial and error approach is taken. The magnification ratio is set, the supply bin is selected, the original document is placed on the platen, a copy is made, the results are examined, and the original is maneuvered to improve the copy. This process may be repeated until the operator is satisfied with the result.

To aid the operator in locating the original document on the substrate, in addition to the raised document registration edges 26, the document registration system 20 includes a plurality of light emitting elements, the elements 30 through 60. These light emitting elements are beneficially light emitting diodes that are located through the frame 22 and adjacent indicia marks, the indicia marks 62- 92. Based upon the set-up of the copier, selected light emitting elements illuminate to assist the operator in locating the original document on the platen 24.

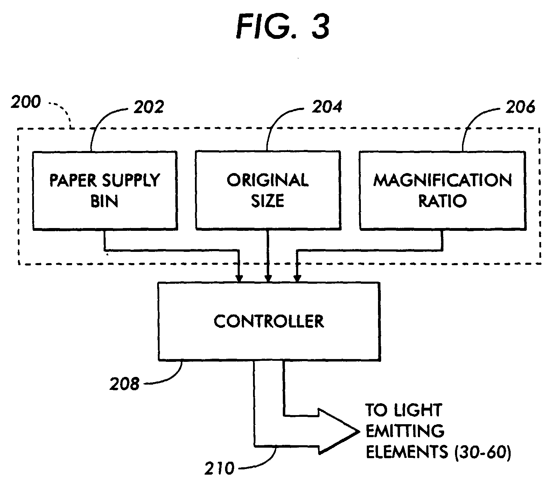

Referring now to Figure 3, the selection of which of the light emitting elements are to be illuminated is performed using a document reproduction controller 208. While various aspects of the present invention are suitable for automated operation, such as the determination of the size of the original document, in general an operator inputs control information using a control panel 200. That control panel includes a user adjustable paper supply bin selector 202 that informs the document on. Since the different paper supply bins hold paper of different sizes and orientations, by knowing which paper supply bin is to supply the copy substrate the document reproduction controller knows the size and orientation of the copy substrate. The control panel also includes a user adjusted original size selector 204 and a magnification ratio (enlargement/reduction) adjustment 206. Defaults for the various selections are beneficial. For example, in the United States defaults to a paper supply bin that holds portrait orientated 8.5" by 11" paper, an original 8.5" by 11" document size, and a magnification ratio of 100% are appropriate. In any event the document reproduction controller 208, which controls the overall operation of the copier, uses the information supplied to it to determine which of the light emitting elements 3-060 should be illuminated. The controller then causes the determined

## Claims

1. A document registration assembly for a machine, comprising:
a platen for supporting an original document;
a base for supporting the platen in a fixed location, said base including a plurality of light emitting elements located along a raised edge registration guide;
an input unit for enabling adjustment of the set-up of the machine; and
a controller for controlling the operation of the machine in response to the input unit, said controller operatively connected to said plurality of light emitting elements;
wherein said controller selectively causes individual ones of said plurality of light emitting devices to emit light so as to indicate where an original document should be located on said platen for the given set-up.

2. The document registration assembly of claim 1, wherein said light emitting elements are light emitting diodes.

3. The document registration assembly of claim 1, wherein said input unit enables adjustment of a magnification of said original document.

4. The document registration assembly of claim 1, wherein said input unit enables adjustment of a supply bin.

5. The document registration assembly of claim 1 wherein said input unit enables adjustment of the size of said original document.

6. The document registration assembly of claim 1, wherein said machine is an electrophotographic copier.

7. The document registration assembly of claim 1, wherein said base further includes indicia marks that show an operator where to place said original document.

8. The document registration assembly of claim 7, wherein said light emitting elements are located adjacent said indicia marks.
